# EUROPÄISCHE PATENTSCHRIFT

(11) **EP 0 571 882 B1**
(45) Veröffentlichungstag und Bekanntmachung des Hinweises auf die Patenterteilung: **12.03.1997**
(21) Anmeldenummer: 93108106.1
(22) Anmeldetag: 18.05.1993
(51) Int. Cl.: C08F 10/00, C08F 4/62

(54) **Verfahren zur Herstellung von Polyolefinwachsen**
Process for the preparation of polyolefin waxes
Procédé de préparation de cires de polyoléfines

(30) Priorität: 26.05.1992 DE 4217378
(43) Veröffentlichungstag der Anmeldung: 01.12.1993
(73) Patentinhaber: HOECHST AKTIENGESELLSCHAFT, 65926 Frankfurt am Main (DE)
(72) Erfinder: Herrmann, Hans-Friedrich, Dr., W-6100 Darmstadt (DE); Böhm, Ludwig, Dr., W-6234 Hattersheim am Main (DE); Voigt, Hartmut, W-6240 Königstein/Taunus (DE); Spaleck, Walter, Dr., W-6237 Liederbach (DE); Hohner, Gerd, Dr., W-8906 Gersthofen (DE)

(56) Entgegenhaltungen:
- EP-A- 0 161 060
- EP-A- 0 321 851
- EP-A- 0 321 852
- EP-A- 0 384 264

## Beschreibung

Die vorliegende Erfindung bezieht sich auf ein Verfahren zur Herstellung von Polyolefinwachsen mit niedrigem Restaschegehalt.

Polyolefinwachse, insbesondere Polyethylenwachse, haben Bedeutung für eine Vielzahl von Anwendungsgebieten. Insbesondere hochkristalline Wachse finden steigendes Interesse als Beimischung für abriebfeste Druckfarben, Lackmattierung und zur Herstellung von emulgierbaren Wachsen für Putzmittel.

Die Herstellung von Wachsen bei einer Temperatur unterhalb von 100°C mit Metallocen-Katalysatoren in einem Suspensionsverfahren ist bekannt (vgl. US 5,023,388; US 4,962,262; US4,962,248; US 5,081,322; EP 416 566 und DE 41 34 088). Ein Problem der bekannten Verfahren, insbesondere bei der Herstellung von Ethylencopolymer- -Wachsen, ist die Löslichkeit oder Quellung der hergestellten Produkte im Suspensionsmittel. Alle konventionell verwendeten Suspensionsmittel wie Hexan, Octan oder aromatenfreie Dieselöle lösen bereits bei 50 - 90°C erhebliche Wachsanteile und vermögen oberhalb von 120° Wachse vollständig zu lösen.

Aus EP-321 851 sind Polyethylenwachse mit sehr enger Molmassenverteilung, hoher Isotaktizität, enger Korngrößenverteilung und hoher Schüttdichte bekannt, die man mittels eines Katalysators in Gegenwart von geringen Mengen Wasserstoff bei der Polymerisation erhält. Der Katalysator besteht aus einer Metallocenverbindung und einem Aluminoxan.

Aus EP-A-321 852 sind 1-Olefinpolymerwachse mit sehr enger Molmassenverteilung, hoher Isotaktizität, enger Korngrößenverteilung und hoher Schüttdichte bekannt, die man mittels eines Katalysators in Gegenwart von geringen Mengen Wasserstoff bei der Polymerisation erhält. Der Katalysator besteht aus einer chiralen stereorigiden Metallocenverbindung und einem Aluminoxan.

Bekannt ist auch die Herstellung von Wachsen in einem Lösungsverfahren mit einem geträgerten Titan/Magnesium-Katalysator bei einer Temperatur von 100 bis 160°C (vgl. US 3,951,935). Die Abtrennung der hochsiedenden Lösemittel vom Produkt ist jedoch aufwendig und verursacht hohe Kosten. Im Temperaturbereich von 50 bis 90°C erfordern diese Katalysatoren zur Regelung der Polymermolmasse einen sehr hohen Wasserstoff-Partialdruck, welcher die Polymerisationsaktivität sehr stark verringert.

Es bestand daher die Aufgabe, ein Verfahren zu finden, in welchem die Wachs-Produkte in fester Form entstehen und einfach vom Suspensionsmittel abgetrennt werden können, sowie einen Katalysator für dieses Verfahren, welcher eine hohe Wasserstoff-Ansprechbarkeit und hohe Aktivität besitzt, sodaß eine Katalysator-Abtrennung entfallen kann.

Es wurde festgestellt, daß Polyolefinwachse bei Temperaturen bis 80°C in flüssigem Propan unlöslich sind. Ferner wurde festgestellt, daß in flüssigem Propan eine Polymerisation mit hochaktiven Metallocen-Katalysatoren möglich ist.

Die Erfindung betrifft somit ein Verfahren zur Herstellung eines Polyolefinwachses durch Polymerisation oder Copolymerisation von Olefinen oder deren Copolymerisation mit Diolefinen bei einer Temperatur von -40 bis 100°C, bei einem Druck von 0,5 bis 120 bar, in Suspension und in Gegenwart eines Katalysators bestehend aus einem Metallocen und einem Cokatalysator wobei das Metallocen eine Verbindung der Formel I 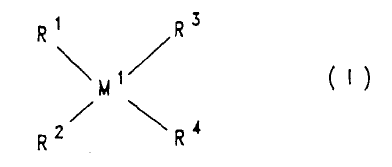 ist, worin M¹ ein Metall der Gruppe IVb, Vb oder Vlb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und einen ein- oder mehrkernigen Kohlenwasserstoffrest bedeuten, welcher mit dem Zentralatom M¹ eine Sandwichstruktur bilden kann, R³ und R⁴ durch eine Brücke verbunden sein können oder einer der Reste R³ und R⁴ ein substituiertes Stickstoffatom ist,
und als Suspensionsmittel niedrigsiedende Kohlenwasserstoffe mit 3 C-Atomen oder niedrigsiedende halogenierte Kohlenwasserstoffe dienen.

Der für das erfindungsgemäße Verfahren zu verwendende Katalysator besteht aus einem Metallocen (Komponente A) und einem Cokatalysator (Komponente B). Das Metallocen ist eine Verbindung der Formel I 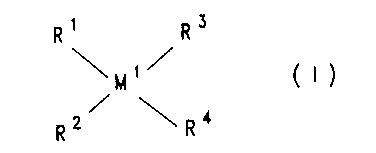 Diese Formel umfaßt auch Verbindungen der Formel Ia 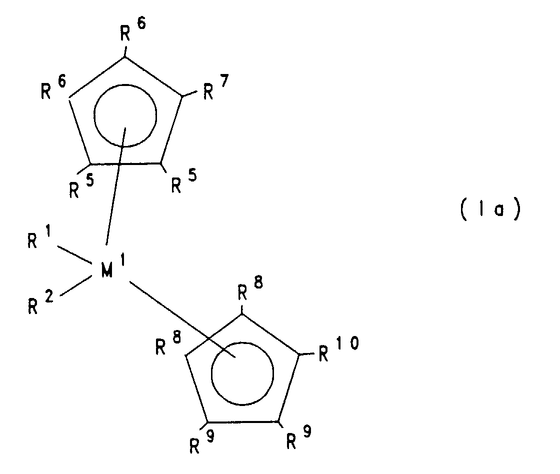 der Formel Ib 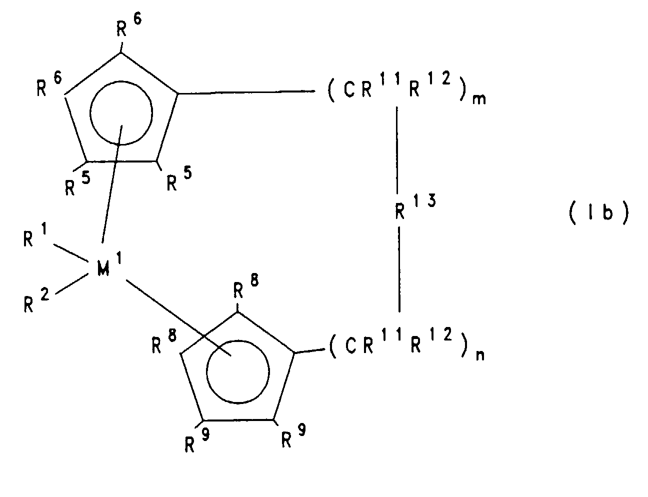 und der Formel Ic 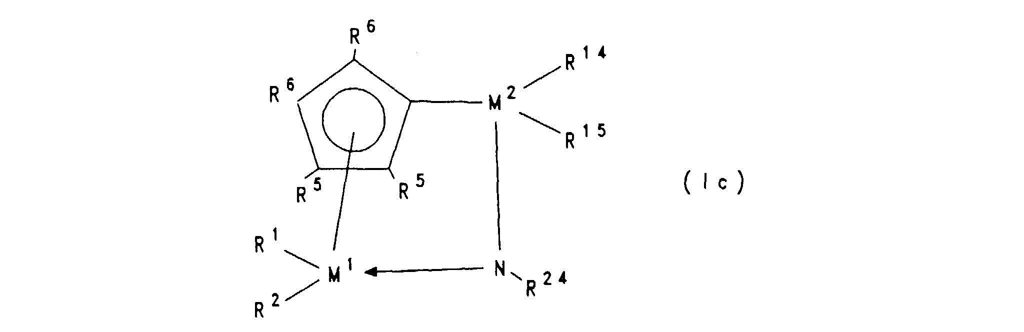 In den Formeln I, Ia, Ib und Ic ist M¹ ein Metall der Gruppe IVb, Vb oder Vlb des Periodensystems, beispielsweise Titan, Zirkon, Hafnium, Vanadium, Niob, Tantal, Chrom, Molybdän, Wolfram, vorzugsweise Zirkon und Hafnium.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-,vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eineC₈-C₄₀-, vorzugsweise C₈-C₁₂-Arylalkenylgruppe oder ein Halogenatom, vorzugsweise Chlor oder Methyl.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, t-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃-, oder -PR¹⁶₂ -Rest, worin R¹⁶ eine C₁-C₁₀-, vorzugsweise C₁-C₃-Alkylgruppe oder C₆-C₁₀-, vorzugsweise C₆-C₈-Arylgruppe, oder im Falle Si oder P enthaltender Reste auch ein Halogenatom, vorzugsweise Chloratom, ist, oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Indenyl, Fluorenyl und Cyclopentadienyl. R¹³ ist 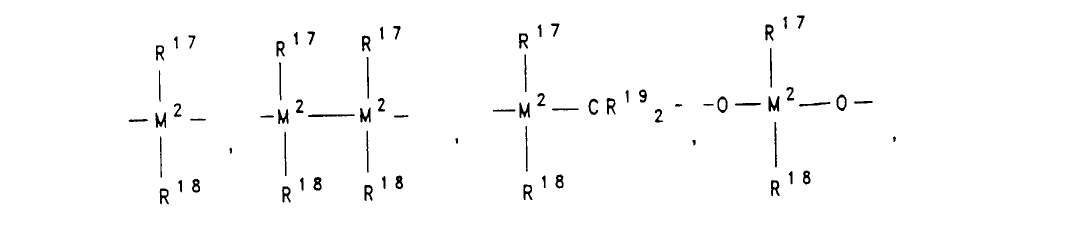 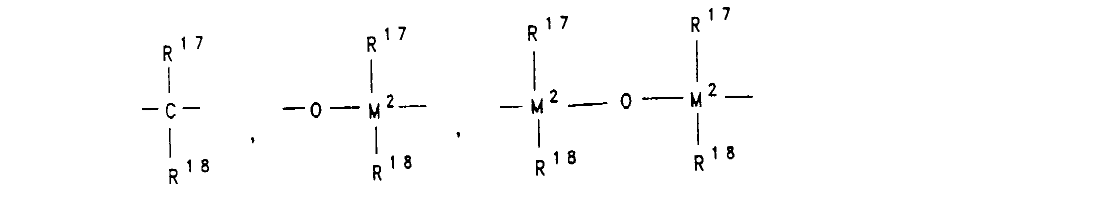 =BR¹⁷, =AlR¹⁷, -Ge-, -Sn-, -0-, -S-, =SO, =SO₂ =NR¹⁷, =CO, =PR¹⁷ oder =P(O)R¹⁷wobei R¹⁷, R¹⁸ und R¹⁹ gleich oder verschieden sind und ein Wasserstoffatom, ein Halogenatom, eine C₁-C₃₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium.
R¹³ ist vorzugsweise =CR¹⁷R¹⁸, =SiR¹⁷R¹⁸, =GeR¹⁷R¹⁸, -O-, -S-, =SO, =PR¹⁷ oder =P(0)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Die vorstehend beschriebenen Metallocene können nach folgendem allgemeinen Reaktionsschema hergestellt werden:

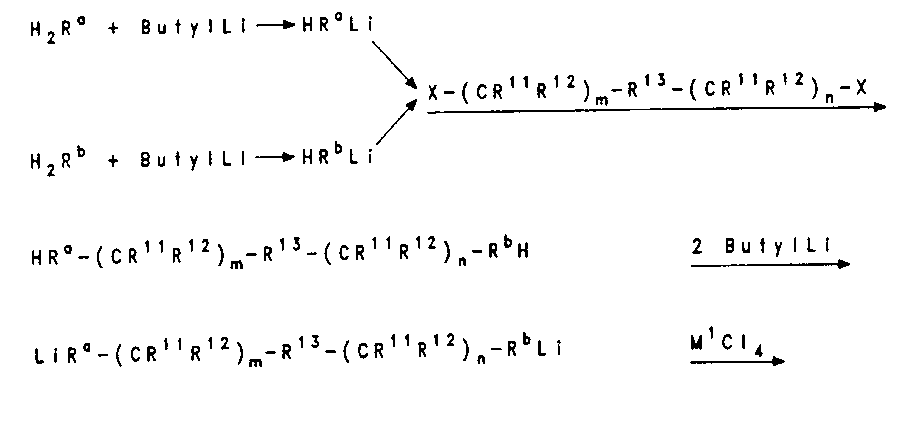

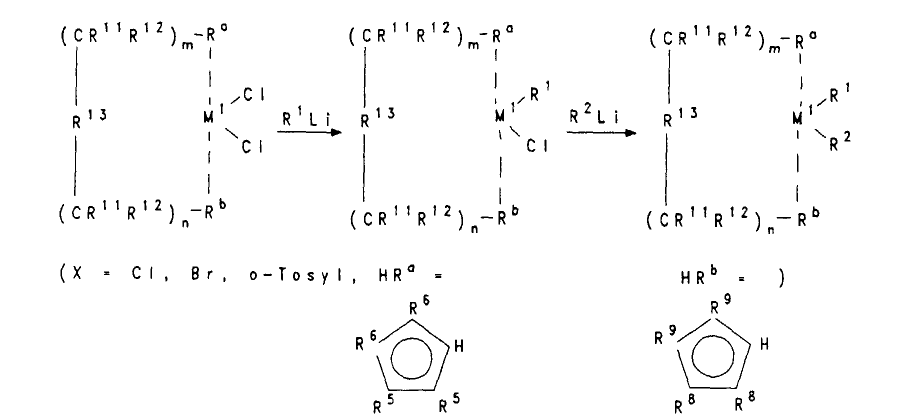

Das Metallocen ist ein unsubstituierter oder substituierter Cyclopentadienylkomplex des Titans, Zirkons oder Hafniums, vorzugsweise des Zirkons oder Hafniums.
Beispiele für bevorzugt geeignete Metallocene sind:
Bis(cyclopentadienyl)zirkondichlorid,
Bis(methylcyclopentadienyl)zirkondichlorid,
Bis(butylcyclopentadienyl)zirkondichlorid,
Bis(alkylcyclopentadienyl)zirkondichlorid,
Bis(1,2-dimethylcyclopentadienyl)zirkondichlorid,
Bis(1,3-dimethylcyclopentadienyl)zirkondichlorid,
Bis(1,2,4-trimethylcyclopentadienyl)zirkondichlorid,
Bis(1,2,3-trimethylcyclopentadienyl)zirkondichlorid,
Bis(indenyl)zirkondichlorid,
Bis(1-methylindenyl)zirkondichlorid,
Bis(2-methylindenyl)zirkondichlorid,
Bis(4-methylindenyl)zirkondichlorid,
Bis(5-methylindenyl)zirkondichlorid,
Bis(2-methyl-4,6-di-i-propyl-indenyl)zirkondichlorid,
Bis(alkylindenyl)zirkondichlorid,
Bis(cyclopentadienyl)zirkondimethyl,
Bis(cyclopentadienyl)zirkondibenzyl,
sowie weitere bevorzugte Metallocene:
Dialkylsilylbis(indenyl)zirkondichlorid,
Alkylalkylenbis(indenyl)zirkondichlorid,
Alkylenbis(indenyl)zirkondichlorid,
Diarylalkylenbis(indenyl)zirkondichlorid,
Alkylenbis(indenyl)hafniumdichlorid,
Diarylsilylbis(indenyl)zirkondichlorid,
(Aryl)(alkyl)bis(indenyl)zirkondichlorid,
Dialkylgermylbis(indenyl)zirkondichlorid,
(Alkyl)(alkenyl)silylbis(indenyl)zirkondichlorid,
(Aryl)(alkenyl)silylbis(indenyl)zirkondichlorid,
Dimethylsilylbis(indenyl)zirkondichlorid,
Ethylenbis(indenyl)zirkondichlorid,
Diphenylsilylbis(indenyl)zirkondichlorid,
Dimethylgermylbis(indenyl)zirkondichlorid,
Bis(pentamethylcyclopentadienyl)zirkondichlorid,
Dimethylsilyl-bis(1-tetrahydroindenyl)zirkondichlorid,
Ethylen-bis(1-tetrahydroindenyl)zirkondichlorid,
Dimethylsilyl-bis-1-(2-methyltetrahydroindenyl)zirkondichlorid,
Ethylen-bis-1-(2-methyl-tetrahydroindenyl)zirkondichlorid,
Dimethylsilyl-bis-1-(2,3,5-trimethylcyclopentadienyl)zirkondichlorid,
Dimethylsilyl-bis-1-(2,4-dimethyl-cyclopentadienyl)zirkondichlorid,
Ethylen-bis(1-indenyl)zirkondichlorid,
Dimethylsilyl-bis(1-indenyl)zirkondichlorid,
Diphenylsilyl-bis(1-indenyl)zirkondichlorid,
Dimethylsilyl-bis(1-indenyl)zirkondimethyl,
Dimethylsilyl-bis-1-(2-methyl-indenyl)zirkondichlorid,
Phenylmethylsilyl-bis-1-(2-methyl-indenyl)-zirkondichlorid,
Dimethylsilyl-bis-1-(2-methyl-4-ethylindenyl)-zirkondichlorid,
Dimethylsilyl-bis-1-(2-methyl-4-i-propylindenyl)-zirkondichlorid,
Ethylen-bis-1-(4,7-dimethyl-indenyl)zirkondichlorid,
sowie außerdem verwendbare Metallocene:
Diphenylmethylen(9-fluorenyl)(cyclopentadienyl)zirkondichlorid,
Dimethylsilyl(9-fluorenyl)(cyclopentadienyl)zirkondichlorid,
Isopropyliden(9-fluorenyl)(cyclopentadienyl)zirkondichlorid,
Isopropyliden(1-indenyl)(cyclopentadienyl)zirkondichlorid,
Besonders bevorzugt verwendet werden Ethylenbis(indenyl)zirkondichlorid, Bis(indenyl)zirkondichlorid, Dimethylsilylbis(indenyl)zirkondichlorid, Bis(cyclopentadienyl)zirkondimethyl, Bis(methylcyclopentadienyl)zirkondichlorid, Bis(butylcyclopentadienyl)zirkondichlorid und Bis(cyclopentadienyl)zirkondichlorid.

Prinzipiell ist als Cokatalysator jede Verbindung geeignet, die auf Grund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem Metallocenkation eingehen.

Der Cokatalysator (=Komponente B) des erfindungsgemäß zu verwendenden Katalysators ist vorzugsweise ein Aluminoxan oder eine andere aluminiumorganische Verbindung. Das Aluminoxan ist eine Verbindung der Formel IIa für den linearen und/oder Formel IIb für den cyclischen Typ 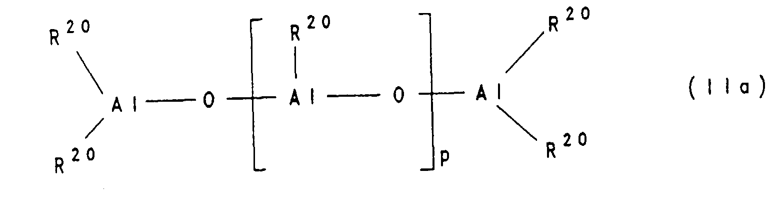 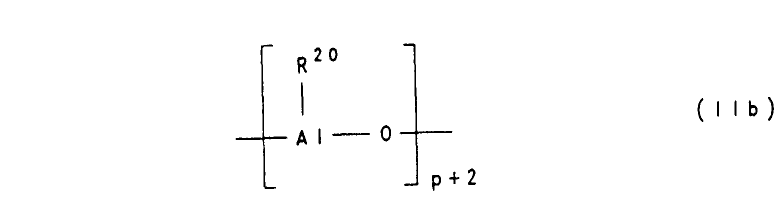 In diesen Formeln bedeutet R²⁰ eine C₁ -C₆-Alkylgruppe, vorzugsweise Methyl, Ethyl, n-Butyl oder Isobutyl, insbesondere Methyl oder Butyl, und p ist eine ganze Zahl von 4 bis 30, bevorzugt 10 bis 20, wobei die Reste R²⁰ auch verschieden sein können. Besonders bevorzugt sind Methylaluminoxan und Methylbutylaluminoxan mit einem Verhältnis Methyl : Butyl = 100:1 bis 1:1, wobei Butyl n-Butyl oder i-Butyl oder n-Butyl/i-Butyl-Gemische bedeuten soll und die Reste eine beliebige, bevorzugt statistische Verteilung besitzen.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls oder eines Gemisches verschiedener Aluminiumtrialkyle, indem die Lösung des Aluminiumtrialkyls, vorzugsweise Aluminiumtrimethyl, mit kleinen Portionen Wasser umgesetzt werden. Dies geschieht vorzugsweise unter Kühlung und intensivem Mischen, beispielsweise mittels eines Hochgeschwindigkeitsrührers. Die bei einer derartigen Umsetzung entstehenden unlöslichen Aluminoxane können ebenfalls als Katalysatorkomponente B verwendet werden.

Eine weitere Möglichkeit ist die Herstellung von geträgerten Aluminoxanen, indem beispielsweise das Trägermaterial unter Inertbedingungen in der Lösung mindestens eines Aluminiumalkyls suspendiert und diese Suspension mit Wasser hydrolysiert wird.

Das Trägermaterial ist ein Oxid des Siliciums oder Aluminiums, welches zusätzlich ein oder mehrere andere Oxide der Elemente Al, K, Mg, Na, Si, Ti, Zr enthalten kann und/oder dessen Oberfläche durch Umsetzung mit Alkylsilanen, Alkylhalogensilanen, Alkoxysilanen, Silazanen oder anderen Alkylverbindungen hydrophobiert sein kann. Das Trägermaterial kann vor dem Einsatz im Vakuum, in einem Ofen, in einem beheizten Fließbett oder auf andere Weise von adsorbiertem Wasser und Sauerstoff befreit werden. Das so vorbehandelte Trägermaterial besitzt einen Rest-Wassergehalt, welcher durch Glühen während 2 h bei 1000°C entfernt werden kann, von kleiner 3 Gew.-%.

Zur Herstellung eines geträgerten Aluminoxans wird das Trägermaterial unter Inertbedingungen in die Lösung mindestens eines Aluminiumalkyls der Formel AlR²¹₃, worin R²¹ eine C₁-C₆-Alkylgruppe, eine C₁-C₆-Fluoralkylgruppe, eine C₆-C₁₈-Arylgruppe, eine C₆-C₁₈-Fluorarylgruppe oder ein Wasserstoffatom, bevorzugt Methyl, Ethyl, i-Propyl, n-Butyl, i-Butyl bedeutet, einträgt und durch Rühren oder dergleichen suspendiert. Das Trägermaterial wird in einer Menge von weniger als 100 g, bevorzugt weniger als 50 g pro mol Aluminumalkyl eingesetzt. Die Lösemittelmenge wird so gewählt, daß bis zu 20 Gew.-%, vorzugsweise bis zu 10 Gew.-% Trägermaterial suspendiert werden. Dabei sind neben den bekannten aromatischen Lösemitteln wie Toluol auch aliphatische Lösemittel wie Pentan, Hexan, Heptan, n-Decan oder aromatenfreie Dieselöle (Siedepunkte im Bereich von 60°C bis 300°C) verwendbar.

Die Suspension des Trägermaterials wird bei einer Temperatur von -20°C bis +60°C unter Kühlung und intensivem Mischen vorsichtig mit Wasser oder mit Lösungen, Mischungen oder Emulsionen von Wasser in anderen Lösemitteln versetzt, wobei die Wassermenge kontinuierlich oder diskontinuierlich in kleinen Portionen zudosiert wird. Die Gesamtmenge Wasser beträgt 50 bis 100 mol-%, bevorzugt 50 bis 80 mol-%, bezogen auf ein mol Aluminium der vorgelegten Aluminiumalkylverbindung.

Bei einem anderen Verfahren wird fein gepulvertes Kupfersulfat-pentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuS0₄.5H₂0 zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und das Toluol unter Vakuum abdestilliert.

Weiterhin erhät man Aluminoxane, wenn man bei einer Temperatur von -10 bis 100°C in einem inerten aliphatischen oder aromatischen Lösemittel gelöstes Aluminiumtrialkyl, mit kristallwasserhaltigen Aluminiumsalzen zur Reaktion bringt. Bevorzugt werden Heptan und Toluol sowie Aluminiumsulfat. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere verwendet, die einen hohen Gehalt an Kristallwasser aufweisen. Besonders bevorzugt ist Aluminiumsulfat-Hydrat, vor allem die Verbindungen Al₂(S0₄)₃.18H₂0 und Al₂(S0₄)₃.16H₂0 mit dem besonders hohen Kristallwassergehalt von 16 bzw. 18 mol H₂0/mol Al₂(S0₄)₃.

Nachstehend ein Beispiel zur Herstellung von Methylaluminoxan:
37,1 g Al₂(S0₄)₃.18H₂0 (0,056 mol, entsprechend 1 mol H₂0) wurden in 250 cm³ Toluol suspendiert, mit 50 cm³ Trimethylaluminium (0,52 mol) versetzt und bei 20°C zur Reaktion gebracht. Nach 30 Stunden Reaktionszeit sind ca. 1 mol Methan entwickelt worden. Anschließend wurde die Lösung vom festen Aluminiumsulfat abfiltriert. Durch Abziehen des Toluols wurden 19,7 g Methylaluminoxan erhalten. Die Ausbeute betrug 63% d.Th.. Die kryoskopisch in Benzol bestimmte mittlere Molmasse lag bei 1170. Die Anzahl der (Al(R²⁰)-O)-Einheiten errechnete sich zu 20,2.
Der mittlere Oligomerisationsgrad betrug also ca. 20.

Eine weitere Variante zur Herstellung von Aluminoxanen besteht darin, Aluminiumtrialkyl in dem im Polymerisationskessel vorgelegten Suspensionsmittel, vorzugsweise im flüssigen Monomeren, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam.

Das Aluminoxan wird entweder als Lösung oder als Suspension aus den oben beschriebenen Herstellungsverfahren verwendet.

Weiterhin brauchbare aluminiumorganische Verbindungen sind solche der Formeln AlR²¹₂H,AlR²¹₃,AlR²¹₂Cl, Al₂R²¹₃Cl₃ und AlR²¹Cl₂, worin R²¹ eine C₁-C₆-Alkylgruppe, eine C₁-C₆-Fluoralkylgruppe, eine C₆-C₁₈-Arylgruppe, eine C₆-C₁₈-Fluorarylgruppe oder ein Wasserstoffatom bedeutet. Beispiele für R²¹ sind Methyl, Ethyl, i-Propyl, n-Butyl, i-Butyl oder n-Octyl.

Die Herstellung des erfindungsgemäß zu verwendenden Katalysators kann durch Umsetzung der Übergangsmetall-Verbindung mit der aluminiumorganischen Verbindung auf verschiedene Weise geschehen:
1) Die aluminiumorganische Verbindung wird in einem geeigneten Lösemittel, wie beispielsweise Pentan, Hexan, Heptan, Toluol oder Dichlormethan mit der Übergangsmetall-Verbindung bei einer Temperatur von -20° bis + 120°C, bevorzugt bei 15° bis 40°C, durch intensives Mischen, beispielsweise durch Verrühren, zusammengebracht. Das molare Verhältnis Al : M¹ beträgt dabei 1:1 bis 10000: 1, bevorzugt 10: 1 bis 2000: 1, und die Reaktionszeit 5 bis 120 Minuten, bevorzugt 10 bis 30 Minuten, bei einer Aluminium-Konzentration von größer 0,01 mol/dm³, bevorzugt größer 0,5 mol/dm³ unter Inertgas.
2) Ein unlösliches oder geträgertes Aluminoxan wird als Suspension mit einem Gehalt von 1 bis 40 Gew%, bevorzugt mit 5 bis 20 Gew%, in einem aliphatischen, inerten Suspensionsmittel wie n-Decan, Hexan, Heptan oder Dieselöl mit der feingemahlenen Übergangsmetall-Verbindung oder ihrer Lösung in einem inerten Lösemittel wie Toluol, Hexan, Heptan oder Dichlormethan in einem molaren Verhältnis Al : M¹ von 1:1 bis 10000 : 1, bevorzugt von 10 : 1 bis 2000 : 1, bei einer Temperatur von -20° bis + 120°C, bevorzugt 15° bis 40°C, während einer Reaktionszeit von 5 bis 120 Minuten, bevorzugt 10 bis 30 Minuten, unter intensivem Mischen umgesetzt.

Während der Reaktion zur Herstellung des Katalysators treten insbesondere bei der Verwendung von Metallocenen mit Absorpionsmaxima im sichtbaren Bereich Veränderungen in der Farbe der Reaktionsmischung auf, an deren Verlauf sich der Fortgang der Reaktion verfolgen läßt.

Der so hergestellte Katalysator wird entweder als Suspension direkt zur Polymerisation eingesetzt oder durch Filtration oder Dekantieren abgetrennt und mit einem inerten Suspensionsmittel wie Toluol, n-Decan, Hexan, Heptan, Dieselöl, Dichlormethan gewaschen. Nach einer derartigen Wäsche kann er im Vakuum getrocknet und als Pulver oder noch mit Lösemittel behaftet wieder resuspendiert als Suspension in einem inerten Suspensionsmittel, wie beispielsweise Toluol, Hexan, Heptan, Dieselöl oder Dichlormethan in das Polymerisationssystem dosiert werden.

Der gemäß 1) oder 2) hergestellte Katalysator kann auch vorpolymerisiert verwendet werden oder das Metallocen kann auf einen Träger aufgebracht eingesetzt werden. Zur Vorpolymersation wird bevorzugt eines der zu polymerisierenden Olefine verwendet. Geeignete Trägermaterialien sind beispielsweise Silicagel, Aluminiumoxid, festes Aluminoxan oder andere organische oder anorganische Trägermaterialien. Geeignet ist auch ein Polyolefin-Träger.

Als Cokatalysatoren können anstelle der aluminiumorganischen Verbindungen auch Verbindungen der Formeln R²²ₓNH₄₋ₓBR²³₄, R²²ₓPH₄₋ₓBR²³₄, R²²₃CBR²³₄ oder BR²³₃ verwendet werden. In diesen Formeln bedeutet x eine Zahl von 1 bis 4, die Reste R²² sind gleich oder verschieden, bevorzugt gleich, und bedeuten C₁-C₁₀-Alkyl oder C₆-C₁₈-Aryl oder zwei Reste R²² bilden zusammen mit dem sie verbindenden Atom einen Ring, und die Reste R²³ sind gleich oder verschieden, bevorzugt gleich, und stehen für C₆-C₁₈-Aryl, das durch Alkyl, Haloalkyl oder Fluor substituiert sein kann. Insbesondere steht R²² für Ethyl, Propyl, Butyl oder Phenyl und R²³ für Phenyl, Pentafluorphenyl, 3,5-Bis-trifluormethylphenyl, Mesityl, Xylyl oder Tolyl.

Diese Cokatalysatoren sind insbesondere geeignet in Kombination mit Metallocenen der Formel I, wenn R¹ und R² eine C₁-C₁₀-Alkylgruppe oder eine Aryl- oder Benzylgruppe, vorzugsweise Methylgruppe, bedeuten. Die Derivatisierung zu den Metallocenen der Formel I kann nach literaturbekannten Methoden, beispielsweise durch Umsetzung mit Alkylierungsmitteln wie Methyllithium erfolgen (vgl. Organometallics **9** (1990) 1539; J. Am. Chem. Soc. **95** (1973) 6263).

Bei Verwendung der vorgenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösemittels, wie beispielsweise Toluol, hergestellt.

Als Monomere werden lineare oder verzweigte Olefine oder Diolefine mit 2 bis 18 C-Atomen eingesetzt. Beispiele hierfür sind Ethylen, Propylen, 1-Buten, 2-Buten, 1-Penten, 1-Hexen, 1-Octen, 2-Methyl-1-propen, 3-Methyl-1-buten, 3-Methyl-1-penten, 4-Methyl-1-penten, 4-Methyl-1-hexen, Styrol, Cyclopenten, Cyclohexen, 1,3-Butadien, 1,4-Pentadien, 1,4- oder 1,5-Hexadien, 1,7-Octadien. Bevorzugt ist die Polymerisation von Ethylen oder Propylen sowie die Copolymerisation von Ethylen oder Propylen mit einem Olefin mit 3 bis 10 C-Atomen, besonders bevorzugt hergestellte Copolymerwachse sind Ethylen/Propylen-, Ethylen/1-Buten-, Ethylen/1-Hexen-, und Ethylen/Propylen/-1-Buten-Terpolymerwachse.

Die Polymerisation wird diskontinuierlich oder kontinuierlich, ein- oder mehrstufig durchgeführt, wobei durch den nur geringen zeitabhängigen Abfall der Polymerisationsaktivität beliebige Verweilzeiten realisiert werden können.
Die Temperatur beträgt 0 bis 100°C, vorzugsweise 60 bis 80°C. Polymerisiert werden 70 bis 100, vorzugsweise 80 bis 100 Gew.-%, bezogen auf die Gesamtmenge der Monomeren, Ethylen oder Propylen und 0 bis 30, vorzugsweise 0 bis 20 Gew.-%, bezogen auf die Gesamtmenge der Monomeren, von mindestens einem Comonomer.

Als Molmassenregler wird Wasserstoff zugegeben, wobei der Wasserstoffpartialdruck im Bereich von 0,05 bis 50 bar, vorzugsweise 0,1 bis 25 bar, insbesondere 0,2 bis 10 bar liegt. Das Molverhältnis der Olefine zu Wasserstoff beträgt 2 bis 200, vorzugsweise 4 bis 50. Weiterhin kann die Polymerisationstemperatur verändert werden. Breit verteilte Polymere sind zugänglich durch einen mehrstufigen Prozess oder durch Verwendung von Mischungen von mehreren Katalysatoren. Darüber hinaus wird die in dem erfindungsgemäßen Verfahren erzielte Polymer-Molmasse durch die Art der verwendeten Katalysator-Komponente A und durch das Al/M¹-Verhältnis des Katalysator-Systems bestimmt.

Der Gesamtdruck im Polymerisationssystem beträgt 0,5 bis 120 bar. Bevorzugt ist die Polymerisation in dem technisch besonders interessanten Druckbereich von 5 bis 64 bar.

Dabei wird die Übergangsmetallkomponente in einer Konzentration, bezogen auf das Übergangsmetall, von 10⁻³ bis 10⁻⁷, vorzugsweise 10⁻⁴bis 10⁻⁶ mol M¹ pro dm³ Lösemittel bzw. pro dm³ Reaktorvolumen angewendet. Der Cokatalysator wird in einer Konzentration von 10⁻⁵ bis 10⁻¹ mol, bevorzugt 10⁻⁴ bis 10⁻² mol pro dm³ Lösemittel bzw. pro dm³ Reaktorvolumen verwendet, bezogen auf den Gehalt an Aluminium. Prinzipiell sind aber auch höhere Konzentrationen möglich.

Als Suspensionsmittel dienen niedrigsiedende Kohlenwasserstoffe mit 3 C-Atomen, wie beispielsweise Propan oder niedrigsiedende halogenierte Kohlenwasserstoffe, wie beispielsweise Methylenchlorid sowie deren Gemische untereinander und gegebenfalls mit anderen Suspensionsmitteln, wie Heptan, Octan, Dieselölen, Toluol oder mit Olefinen, wie oben beschrieben. Bevorzugt wird Propan verwendet.

Zur Polymerisation kann vor der Zugabe des Katalysators zusätzlich eine andere Aluminiumalkylverbindung wie z.B. Trimethylaluminium, Triethylaluminium, Triisobutylaluminium oder Isoprenylaluminium zur Inertisierung des Polymerisations-systems in einer Konzentration von 1 bis 0,001 mmol Al pro kg Reaktorinhalt zugegeben werden. Darüber hinaus können diese Verbindungen auch zusätzlich zur Regelung der Molmasse eingesetzt werden.

Das erfindungsgemäß hergestellte Polyolefinwachs wird vom Suspensionsmittel abgetrennt und getrocknet.

Erfindungsgemäß hergestellte Polyethylenwachse bestehen zu 100 bis 80 Gew.-%, bezogen auf das Gesamtpolymer, aus Ethyleneinheiten und zu 0 bis 20 Gew.-%, bezogen auf das Gesamtpolymer, aus Einheiten, die sich von einem anderen Olefin, Diolefin oder anderem ungesättigten Kohlenwasserstoff, insbesondere Propylen, 1-Buten, 2-Buten oder 1-Hexen ableiten. Sie besitzen eine Molmasse M_{w} von ca. 500 bis ca. 50000, vorzugsweise ca. 2000 bis ca. 20000. Die Molmassenverteilung (Polydispersität) M_{w}/Mₙ ist außerordentlich eng und beträgt ca. 1 bis 10, vorzugsweise 1 bis 4. Die Viskositätszahl des Wachses liegt im Bereich von 2 bis 100 cm³/g. Der Schmelzbereich des Wachses ist von ca. 126 bis 131°C für ein Homopolymerisat durch Copolymerisation beliebig hinunter bis ca. 80 bis 90°C einstellbar.

Erfindungsgemäß hergestellte Polypropylenwachse bestehen zu 80 bis 100, vorzugsweise 90 bis 100 Gew.-%, bezogen auf das Gesamtpolymer, aus Propyleneinheiten und zu 0 bis 20, vorzugsweise 0 bis 10 Gew.-%, bezogen auf das Gesamtpolymer, aus Einheiten, die sich von Ethylen oder einem der anderen oben beschriebenen Olefine ableiten. Sie besitzen eine Molmasse M_{w} von 1000 bis 50000 g/mol, bevorzugt 8000 bis 45000 g/mol, eine Polydispersität M_{w}/Mₙ von 1,8 bis 5, bevorzugt 2 bis 4, eine Viskositätszahl von 2 bis 100 cm³/g, bevorzugt
10 bis 60 cm³/g, einen Schmelzpunkt von 50 bis 150°C, bevorzugt 70 bis 140°C, einen Tropfpunkt von 60 bis 150°C, bevorzugt 80 bis 150°C, eine Schmelzviskosität von 100 bis 80000 mPa.s, bevorzugt 120 bis 10000 mPa.s bei 170°C und eine statistische Verteilung der Comonomereinheiten in der Polymerkette.

Ein Vorteil des erfindungsgemäßen Verfahrens liegt in der Anwendung von Katalysatorsystemen, welche bei Temperaturen von 0 bis 100°C auch bei Regelung mit Wasserstoff eine sehr hohe Aktivität besitzen. Dadurch entfällt die Katalysatorzersetzung oder Reinigung der Produkte nach der Polymerisation.

Darüber hinaus ermöglicht das erfindungsgemäße Verfahren, Katalysatorsysteme zu verwenden, welche Produkte mit statistischer Comonomer-Verteilung oder speziellen isotaktischen oder syndiotaktischen Sequenzlängen oder Copolymerisate mit speziellen Comonomeren in einem kostengünstigen Verfahren zugänglich machen.

Ein weiterer Vorteil des erfindungsgemäßen Verfahrens ist die einfache Abtrennung von Restmengen des Suspensionsmittels, welche häufig dem Produkt anhaften. Bei Verwendung von Propan als Suspensionsmittel lassen sich Restmengen bereits durch Entspannen auf Normaldruck entfernen.

Ein weiterer Vorteil des erfindungsgemäßen Verfahrens ist die gute Wasserstoff-Ansprechbarkeit der erfindungsgemäßen Katalysatoren. Verglichen mit anderen Katalysatorsystemen wird ein geringerer Wasserstoff-Partialdruck zum Erreichen der wachstypischen Polymermolmassen erforderlich.

Ein weiterer wesentlicher ökonomischer Vorteil des erfindungsgemäßen Verfahrens ist die geringe Hydrierwirkung der erfindungsgemäßen Katalysatoren, wodurch die Polymerausbeute, bezogen auf die eingesetzten Olefine, verbessert wird. Dadurch müssen weniger hydrierte Nebenprodukte aus dem Gasraum des Polymerisations-Systems abgetrennt werden.

Die nachfolgenden Beispiele sollen die Erfindung näher erläutern.
Es bedeuten
- VZ =: Viskositätszahl in cm³/g 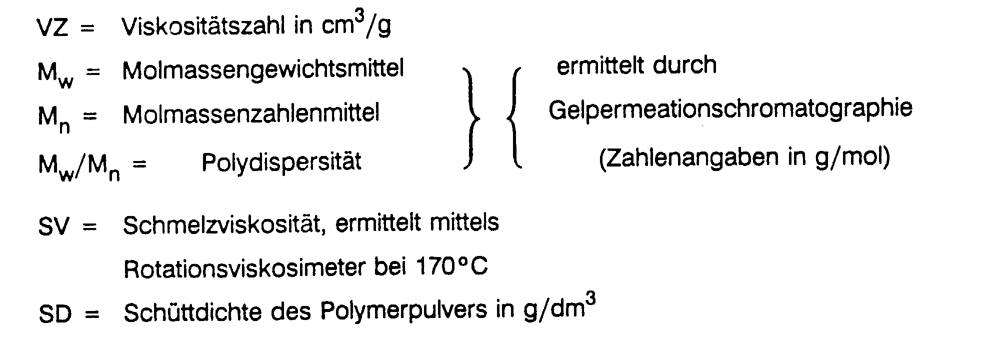
- SV =: Schmelzviskosität, ermittelt mittels Rotationsviskosimeter bei 170°C
- SD =: Schüttdichte des Polymerpulvers in g/dm³

Schmelzpunkte, Kristallisationspunkte, deren Halbwertsbreiten, die Schmelz- und Kristallisationsenthalpien sowie die Glastemperaturen (T_{g}) wurden durch DSC-Messungen (10°C/min Aufheiz-/Abkühlgeschwindigkeit) bestimmt.

### Beispiele

Alle Glasgeräte wurden im Vakuum ausgeheizt und mit Argon oder Stickstoff gespült. Alle Operationen wurden unter Ausschluß von Feuchtigkeit und Sauerstoff in Schlenk-Gefäßen durchgeführt. Die verwendeten Lösemittel wurden unter Argon jeweils frisch über Na/K-Legierung destilliert und in Schlenk-Gefäßen aufbewahrt.

Die angegebenen Polymerschmelzpunkte sind einer DSC-Messung für 2. Aufschmelzen (10°C/min) entnommen. Der Isotaktische Index wurde aus FT-IR-Spektren ohne vorherige Extraktion der Probe über das Intensitätsverhältnis der Banden bei 998 cm⁻¹ und 972 cm⁻¹ gemäß Dechant, "UR-spektroskopische Untersuchungen von Polymeren", Akademie Vlg., Berlin 1972, bestimmt.

Methylaluminoxan wurde für die Vergleichsbeispiele als 10%ige Toluol- Lösung im Handel bezogen und enthielt gemäß Aluminium-Bestimmung 36 mg Al/cm³. Der mittlere Oligomerisationsgrad gemäß Gefrierpunktserniedrigung in Benzol betrug n = 20. Die Aluminium-Bestimmung erfolgte nach Hydrolyse durch Wasser und Schwefelsäure durch komplexometrische Titration nach Schwarzenbach.

### Beispiel 1

Zur Herstellung des Katalysators wurden 5 mg rac-Ethylenbis(indenyl)-zirkondichlorid in 20 cm³ toluolischer Methylaluminoxan-Lösung (entsprechend 27 mmol Al) gelöst und durch 15 minütiges Stehenlassen mit dem Methylaluminoxan umgesetzt.
Parallel hierzu wurde ein trockener mit Stickstoff gespülter 16 dm³-Kessel mit 4 kg Propan gefüllt und bei 30°C 1,5 bar Wasserstoff sowie 4,5 bar Ethylen zudosiert. 30 cm³ der toluolischen Methylaluminoxan-Lösung wurden über eine Druckschleuse zugegeben, der Reaktorinhalt auf 70°C aufgeheizt und bei 100 Upm gerührt. Nach 20 min wurde die Polymerisation bei 250 Upm durch Zugabe des Katalysators über die Druckschleuse gestartet. Die Polymerisationstemperatur wurde durch Kühlen auf 70°C geregelt und der Gesamtdruck durch Nachdosieren von Ethylen auf 31 bar konstant gehalten. Nach 1 h Polymerisationszeit wurde die Reaktion durch Zugabe von Isopropanol abgebrochen und der Reaktor entspannt und geöffnet. Nach Trocknung des Produkts wurden 0,45 kg frei-fließendes Pulver mit einer VZ von 28 cm³/g und einem Schmelzpunkt (DSC) von 126°C erhalten. Die DSC-Schmelzenthalpie betrug 241 J/g. Der d₅₀ einer Siebanalyse lag bei 150 µm. Die Viskosität der Schmelze bei 140°C betrug 1470 mPa.s.

### Beispiel 2

Zur Herstellung des Katalysators wurden 6 mg Bis(indenyl)zirkondichlorid in 20 cm³ toluolischer Methylaluminoxan-Lösung (entsprechend 27 mmol Al) gelöst und durch 15 minütiges Stehenlassen mit dem Methylaluminoxan umgesetzt.
Parallel hierzu wurde ein trockener mit Stickstoff gespülter 16 dm³-Kessel mit 4 kg Propan gefüllt und auf 70°C temperiert. Bei dieser Temperatur wurden 0,5 bar Wasserstoff und 30 cm³ der toluolischen Methylaluminoxan-Lösung über eine Druckschleuse zugegeben und der Ansatz bei 100 Upm gerührt. Der Druck wurde mit Ethylen auf einen Gesamtdruck von 31 bar ergänzt und die Polymerisation bei 250 Upm durch Zugabe des Katalysators über die Druckschleuse gestartet. Die Polymerisationstemperatur wurde durch Kühlen auf 70°C geregelt und der Gesamtdruck durch Nachdosieren von Ethylen konstant gehalten. Nach 1 h Polymerisationszeit wurde die Reaktion durch Zugabe von Isopropanol gestoppt und der Reaktor entspannt und geöffnet. Nach Trocknung des Produkts wurden 0,45 kg frei-fließendes Wachs-Pulver mit einer VZ von 17 cm³/g erhalten. Die Schmelzviskosität bei 140°C betrug 240 mPa.s.

### Beispiel 3

Zur Herstellung des Katalysators wurden 4,2 mg rac-Dimethylsilylbis(indenyl)-zirkondichlorid in 20 cm³ toluolischer Methylaluminoxan-Lösung (entsprechend 27 mmol Al) gelöst und durch 15 minütiges Stehenlassen mit dem Methylaluminoxan umgesetzt.
Parallel hierzu wurde ein trockener mit Stickstoff gespülter 16 dm³-Kessel mit 2,5 kg Propan sowie 1,4 kg Propylen gefüllt und bei 30°C 1,5 bar Wasserstoff zudosiert. 30 cm³ der toluolischen Methylaluminoxan-Lösung wurden über eine Druckschleuse zugegeben, der Reaktorinhalt auf 70°C erwärmt und bei 100 Upm gerührt. Die Polymerisation wurde bei 250 Upm durch Zugabe des Katalysators über die Druckschleuse gestartet. Die Polymerisationstemperatur wurde durch Kühlen auf 70°C geregelt. Nach 1 h Polymerisationszeit wurde die Reaktion durch Zugabe von Isopropanol gestoppt und der Reaktor entspannt und geöffnet. Nach Trocknung des Produkts wurden 0,45 kg PP-Wachs-Pulver mit einer VZ von 14 cm³/g und einem Schmelzpunkt (DSC) von 133°C erhalten. Die DSC-Schmelzenthalpie betrug 95,7 J/g und der Isotaktische Index gemäß IR 87%. Die Schmelzviskosität bei 170°C betrug 100 mPa.s.

### Beispiel 4

Zur Herstellung des Katalysators wurden 4,9 mg rac-Ethylenbis(indenyl)-zirkondichlorid in 20 cm³ toluolischer Methylaluminoxan-Lösung (entsprechend 27 mmol Al) gelöst und durch 15 minütiges Stehenlassen mit dem Methylaluminoxan umgesetzt.
Parallel hierzu wurde ein trockener mit Stickstoff gespülter 16 dm³-Kessel mit 2,5 kg Propan sowie 1 kg Propylen gefüllt und bei 30°C 1,5 bar Wasserstoff sowie 5,5 bar Ethylen zudosiert. 30 cm³ der toluolischen Methylaluminoxan-Lösung wurden über eine Druckschleuse zugegeben, der Reaktorinhalt auf 70°C erwärmt und bei 100 Upm gerührt. Die Polymerisation wurde bei 250 Upm durch Zugabe des Katalysators über die Druckschleuse gestartet. Die Polymerisationstemperatur wurde durch Kühlen auf 70°C geregelt und der Gesamtdruck durch Nachdosieren von Ethylen auf 34 bar konstant gehalten. Nach 1 h Polymerisationszeit wurde die Reaktion durch Zugabe von Isopropanol gestoppt und der Reaktor entspannt und geöffnet. Nach Vacuumtrocknung des Produkts wurden 2,70 kg Copolymer-Wachs mit einer VZ von 37 cm³/g, einem Schmelzpunkt (DSC) von 87°C erhalten. Die DSC-Schmelzenthalpie betrug 70,4 J/g. Die Schmelzviskosität bei 140°C betrug 6100 mPa.s.

### Beispiel 5

Herstellung vom geträgertem Aluminoxan:
In einem 16 dm³ Rührreaktor wurden unter Inertbedingungen 6 dm³ aromatenfreies Dieselöl (Sdp. 100-120°C) vorgelegt, 0,60 dm³ Trimethylaluminium (6,24 mol) zugegeben und auf 25°C temperiert. In diesen Reaktor wurden über einen Feststoff-Trichter 240 g Silicagel (®Aerosil R 812; Degussa AG), die zuvor bei 120°C in einem Argon-Wirbelbett getrocknet wurden, zudosiert und mit Hilfe des Rührers und eines Umpump-Systems homogen suspendiert. Das Umpump-System saugte den Reaktorinhalt über einen Anschluß am Reaktorboden mit einer Pumpe an, drückte diesen in einen Mischer und von dort durch eine Steigleitung über einen Wärmetauscher in den Reaktor zurück. Der Mischer war so gestaltet, daß in dem Zulauf durch einem verengten Rohrquerschnitt eine erhöhte Strömungsgeschwindigkeit entstand, in dessen Turbulenzzone axial und entgegen der Strömungsrichtung eine dünne Zuleitung geführt war, durch welche in zeitlichen Abständen unter 40 bar Argon jeweils eine definierte Menge Wasser eingespeist werden konnte. Am Mischer wurden während 4 h insgesamt 92 g Wasser in Portionen von 0,1 cm³ alle 15 s zudosiert. Nach vollständiger Zugabe des Wassers bei einer Reaktor-Innentemperatur von 25°C wurde das Umpump-System abgestellt und der Reaktorinhalt bei 25°C noch 5 h gerührt.

Das so hergestellte geträgerte Aluminoxan wurde als eine 12 Gew%ige Suspension in Dieselöl (Sdp. 100-120°C) eingesetzt. Der Aluminium-Gehalt betrug 1,06 mmol Al pro cm³ Suspension. Der isolierte Feststoff enthielt 31 Gew% Al. Das Suspensionsmittel enthielt weniger als 0,1 Gew% Aluminium.

### Herstellung des Katalysators:

5 cm³ der Suspension des geträgerten Aluminoxans wurden unter Argon in eine G3-Schlenkfritte eingefüllt und abfiltriert. Der verbliebene Feststoff wurde in 20 cm³ eines aromatenfreien inerten Dieselöls (Sdp. 100 bis 120°C) resuspendiert. Zu dieser Suspension wurden 2,5 cm³ einer 1/250 molaren Lösung von Bis(cyclopentadienyl)-zirkondichlorid in absolutem Toluol zudosiert und 1/4 h bei 30°C verrührt. Anschließend wurde das Gemisch filtriert, der verbliebene Feststoff mit 20 cm³ Dieselöl gewaschen und für die Polymerisation erneut in 20 cm³ Dieselöl resuspendiert.

### Polymerisation:

Parallel hierzu wurde ein trockener mit Stickstoff gespülter 16 dm³-Kessel mit 4 kg Propan gefüllt und bei 30°C 2,5 bar Wasserstoff sowie 4,5 bar Ethylen zudosiert. Der Reaktorinhalt wurde auf 70°C aufgeheizt, 2 cm³ einer toluolischen Trimethylaluminium-Lösung über die Druckschleuse zugegeben und bei 100 Upm gerührt. Die Polymerisation wurde bei 250 Upm durch Zugabe des Katalysators über die Druckschleuse gestartet, die Polymerisationstemperatur durch Kühlen auf 70°C geregelt und der Gesamtdruck durch Nachdosieren von Ethylen auf 33,5 bar konstant gehalten. Nach 1 h Polymerisationszeit wurde die Reaktion durch Zugabe von Isopropanol gestoppt und der Reaktor entspannt und geöffnet. Nach Trocknung des Produkts wurden 0,20 kg Wachs-Pulver mit einer VZ von 4,0 cm³/g erhalten. Die DSC-Schmelzenthalpie betrug 209,5 J/g. Die GPC-Analyse zeigte ein M_{w}/Mₙ von 1,4 bei einem M_{w} von 700 g/mol.

### Beispiel 6

7 mg Bis(methylcyclopentadienyl)zirkondichlorid wurden analog zu Beispiel 1 in 20 cm³ toluolischer Methylaluminiumoxan-Lösung voraktiviert. Die Polymerisation gemäß Beispiel 1 wurde mit 0,5 bar Wasserstoff wiederholt, wobei während der Polymerisation ein Ethylen-Partialdruck von 6 bar kontinuierlich konstant gehalten und 4 g/h Wasserstoff diskontinuierlich in 60 Teilen nachdosiert wurden. Die Kenndaten sind in Tabelle 1 zusammengefaßt.

### Beispiel 7 bis 10

Beispiel 6 wurde jeweils mit 7 mg der in Tabelle 1 zusammengestellten Metallocene wiederholt. Die Kenndaten sind in Tabelle 1 zusammengefaßt.

### Herstellung von Dimesitylsilylbis(indenyl)zirkondichlorid

7 g Inden in 50 cm³ THF wurden unter Inertbedingungen bei 0° C mit 24 cm³ Butyllithium (2,5 molar in Hexan) umgesetzt. Das Gemisch wurde auf Raumtemperatur erwärmt, zu einer Lösung von 10 g Dimesityldichlorsilan in 40 cm³ THF zugetropft und 4 h unter Rückfluß erhitzt. Nach Zersetzung des Ansatzes mit Wasser, Extraktion mit Diethylether und Chromatographie mit Toluol/Hexan = 2/1 an SiO₂ wurden 3,28 g Dimesitylbis(indenyl)silan als Feststoff erhalten. MS (m/e, l rel%): 496 (100, M⁺); ¹H-NMR in CDCl₃: 2,22 ppm (12H,s), 2,27 ppm (6H,s), 3,40 ppm (4 H, s), 6,8 - 7,4 ppm (14 H, m).

Der Feststoff wurde in Diethylether gelöst und bei 0° C langsam mit 5,8 cm³ Butyllithium (2,5 molar in Hexan) versetzt. Nach 1 h Rühren bei Raumtemperatur und Einengen der Suspension wurde das Lithiumsalz abfiltriert und mit Hexan nachgewaschen. 1,54 g Zirkontetrachlorid wurden mit 50 cm³ Methylenchlorid vermischt, auf -78° C gekühlt und unter Rühren das isolierte Lithiumsalz zugegeben. Bei -20° C wurde dann der Ansatz 2 h gerührt, anschließend auf Raumtemperatur erwärmt und das Lösemittel entfernt. Durch Extraktion mit Toluol/THF und Wäsche mit Hexan wurden 3,8 g Dimesitylsilylbis(indenyl)zirkondichlorid mit rac:meso = 3:1 gewonnen. ¹H-NMR in CDCl₃: 2,25 ppm (meso 6 H, s), 2,35 ppm (meso 12 H, s), 2,68 ppm (rac 6 H, s), 2,78 ppm (rac 12 H, s), 6,0 ppm (meso, 2 H, d), 6,08 ppm (rac, 2 H, d), 6,50 - 7,65 ppm (14 H, m).

### Beispiel 11

7 mg Bis(indenyl)zirkondichlorid wurden analog zu Beispiel 1 voraktiviert.
Parallel hierzu wurde ein trockener, mit Stickstoff gespülter 16 dm³-Kessel mit 5 kg Propan sowie 160 g Propylen gefüllt. 30 cm³ toluolische Methylaluminoxan-Lösung wurden über eine Druckschleuse zugegeben, der Reaktor auf 70° C erwärmt, der Inhalt mit 250 Upm gerührt und 0,5 bar Wasserstoff sowie 4 bar Ethylen zudosiert. Die Polymersation wurde durch Zugabe des Katalysators über die Druckschleuse gestartet. Die Polymersationstemperatur wurde durch Kühlen auf 70° C geregelt, der Gesamtdruck durch Nachdosieren von Ethylen auf 32 bar konstant gehalten und Wasserstoff mit 4 g/h diskontinuierlich iin 60 Schritten zugegeben. Nach 1 h Reaktionszeit wurde die Polymerisation durch Zugabe von Isopropanol beendet und der Reaktor entspannt und geöffnet. Nach Vakuumtrocknung des Produkts wurden 1,1 kg Copolymer-Wachs mit einer VZ von 18 cm³/g, einem Schmelzpunkt (DSC) von 120° C erhalten. Die DSC-Schmelzenthalpie betrug 243 J/g. Die Schmelzviskosität bei 140° C betrug 258 mPa.s. (Tabelle 2).

### Beispiel 12

Beispiel 11 wurde wiederholt, mit dem Unterschied, daß anstelle der toluolischen Methylaluminoxan-Lösung zur Aktivierung des Metallocens und zur Vorlage in den Reaktor die gleiche molare Menge einer Methylisobutylaluminoxan-Lösung in Heptan eingesetzt wurde.
Die Herstellung dieser 10 Gew.-% Heptan-Lösung erfolgte gemäß Beispiel 7 aus EP 442 300. Die GC-Analyse der bei der vollständigen Hydrolyse einer Probe entstehenden Gase ergab 12,5 mol-% i-Butan und 87,5 mol-% Methan.

Die Polymersation ergab 650 g Copolymer einer VZ von 11 cm³/g und einem DSC Schmelzpunkt von 117° C. (Tabelle 2)

### Beispiel 13

6,25 mg Bis(indenyl)zirkondichlorid wurden wie in Beispiel 5 zur Herstellung des Katalysators auf geträgertem Aluminoxan eingesetzt und dann analog zu Beispiel 11 zur Copolymerisation verwendet, wobei auf weiteres Methylaluminoxan verzichtet und stattdessen 5 mmol Triisobutylaluminium in Heptan im Reaktor vorgelegt wurden. Die Polymerisation ergab 1,0 kg Copolymer mit einer VZ von 25 cm³/g und einem DSC Schmelzpunkt von 116,2°C. (Tabelle 2)

### Beispiele 14 und 15

Beispiel 11 wurde jeweils mit 7 mg Bis(methylcyclopentadienyl)zirkondichlorid und 6 mg Bis(n-butylcyclopentadienyl)zirkondichlorid wiederholt. Die Ergebnise sind in Tabelle 2 zusammengefaßt.

### Beispiele 16 bis 18

Beispiel 11 wurde wiederholt, wobei steigende Mengen Propylen vorgelegt wurden. Die Ergebnisse sind in Tabelle 2 zusammengefaßt. Das Produkt aus Beispiel 18 enthielt nach ¹³C-NMR 7,5 mol-% Propylen, bei einer Kristallinität, berechnet aus der Schmelzwärme, von ca. 53%. Das Produkt entstand als nicht-verklumptes Pulver, der Reaktor war frei von Belägen. Selbst derart niedrig-kristalline Produkte blieben in Propan ungelöst.

### Beispiele 19 bis 26

Das Beispiel 11 wurde wiederholt, wobei anstelle von Propylen die in Tabelle 3 angegebene Menge und Art eines anderen Comonomeren (1-Hexen, 1-Buten, 4-Methyl-1-penten) flüssig vorgelegt wurde. Die Polymerisation wurde dann bei Verwendung von ca. 7 mg des in Tabelle 3 angegebenen Metallocens gestartet. Die entstehenden Wachse waren feste Pulver mit einer Schüttdichte von 300 bis über 400 g/dm³. Die Katalysator-Ausbeuten und die analytischen Daten der Versuche sind in Tabelle 3 zusammengestellt.

### Beispiel 27

Analog zu Beispiel 11 wurden 6,5 mg des Katalysators A voraktiviert und der Reaktor vorbereitet, wobei 89 cm³ Propylen und zusätzlich 160 cm³ 4-Methyl-1-penten eingefüllt wurden. Die Polymersation wurde bei 70° C wie in Beispiel 11 durchgeführt. Das nach 1 h entstandene Terpolymer-Wachs hatte eine VZ von 21,3 cm³/g, einen Schmelzpunkt von 1 114,6°C, eine Schmelzwärme von 185 J/g und eine Schüttdichte von 485 g/dm³. Das ¹³C-NMR zeigte einen Einbau von 3,6 mol-% Propylen und 0,2 mol-% 4-Methyl-1-penten. Die Katalysator-Ausbeute betrug 71 kg/mmol Zr.

**Tabelle 1**

| Beispiel | Kat. | KA | VZ | Smv | Tₘ | H_{f} |
|---|---|---|---|---|---|---|
| 6 | A | 32,6 | 33 | 1320 | 130 | 280 |
| 7 | B | 36 | 23 | 1150 | 128 | 279 |
| 8 | C | 33 | 32 | 3090 | 129 | 278 |
| 9 | D | 40 | 45 | 13084 | 130 | 271 |
| 10 | E | 28 | 29 | 2040 | 129 | 275 |

**Tabelle 2**

| Beisp. | Kat. | g C₃ | KA | VZ | mol% C₃ | Smv | Tₘ | H_{f} |
|---|---|---|---|---|---|---|---|---|
| 11 | F | 160 | 57,7 | 18 | 1,9 | 258 | 120 | 243 |
| 12 | F | 160 | 32 | 11 | 3,0 | 68 | 117 | 231 |
| 13 | G | 160 | 73 | 25 | 3,3 | 1090 | 116 | 215 |
| 14 | A | 160 | 38 | 23 | 1,0 | 965 | 124 | 236 |
| 15 | B | 160 | 56 | 24 | 1,5 | 840 | 123 | 237 |
| 16 | F | 250 | 74 | 22 | 3,2 | 700 | 117 | 206 |
| 17 | F | 375 | 40 | 14 | 4,8 | 170 | 112 | 195 |
| 18 | F | 500 | 18 | 11 | 7,5 | 90 | 106 | 155 |

**Tabelle 3**

| Beisp. | Kat. | Comonom cm³ | KA | VZ | mol% | Smv | Tₘ | H_{f} |
|---|---|---|---|---|---|---|---|---|
| 19 | H | 150 C₆ | 31,5 | 40 | 1,46 | 8000 | 125 | 161 |
| 20 | H | 350 C₆ | 46,8 | 38 | 3,2 | 6400 | 115,4 | 122 |
| 21 | B | 300 C₆ | 54 | 18,1 | 0,8 | 300 | 123 | 232 |
| 22 | A | 680 C₆ | 51 | 21,3 | 1,5 | 550 | 121 | 206 |
| 23 | H | 300 C₄ | 53 | 35 | 3,1 | 4600 | 117 | 162 |
| 24 | B | 600 C₄ | 49 | 22 | 1,6 | 650 | 120,5 | 192 |
| 25 | H | 300 4M1P | 24,2 | 47 | 2,2 | 15700 | 117,9 | 156 |
| 26 | B | 700 4M1P | 49 | 20,7 | 0,9 | 490 | 125 | 228 |
| Legende zu Tabellen 1 bis 3 Katalysatoren: A: Bis(methylcyclopentadienyl)zirkondichlorid, B: Bis(n-butylcyclcopentadienyl)zirkondichlorid, C: Bis(1,2,4-trimethylcydopentadienyl)zirkondichlorid, D: Dimesitylsilyl-bis(indenyl)zirkondichlorid, E: Bis-(tetrahydroindenyl)zirkondichlorid, F: Bis(indenyl)zirkondichlorid, G: Bis(indenyl)zirkondichlorid geträgert auf MAO/SiO₂, H: Ethylenbis(1-indenyl)zirkondichlorid; Comonomer: C6: 1-Hexen, C4: 1-Buten, 4M1P: 4-Methyl-1-penten; KA: kg Wachs/mmol Zr; VZ: Viskositätszahl [cm³/g]; mol% C3: mol% Propylen gemäß ¹³C-NMR; Smv: Schmelzviskosität [mPa.s] bei 140° C; Tₘ: Schmelzpunkt [° C] nach DSC; H_{f}: Schmelzwärme [J/g] nach DSC | | | | | | | | |

## Patentansprüche

1. Verfahren zur Herstellung eines Polyolefinwachses durch Polymerisation von Olefinen oder deren Copolymerisation mit Diolefinen bei einer Temperatur von -40 bis 100°C, bei einem Druck von 0,5 bis 120 bar, in Suspension und in Gegenwart eines Katalysators bestehend aus einem Metallocen und einem Cokatalysator wobei das Metallocen eine Verbindung der Formel I 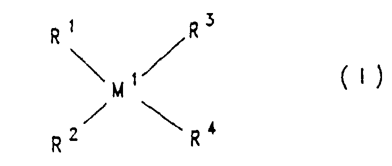 ist, worin M¹ ein Metall der Gruppe IVb, Vb oder Vlb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten
R³ und R⁴ gleich oder verschieden sind und einen ein- oder mehrkernigen Kohlenwasserstoffrest bedeuten, welcher mit dem Zentralatom M¹ eine Sandwichstruktur bilden kann und R³ und R⁴ durch eine Brücke verbunden sein könenn oder einer der Reste R³ und R⁴ ein substituiertes Stickstoffatom ist,
und als Suspensionsmittel niedrigsiedende Kohlenwasserstoffe mit 3 C-Atomen oder niedrigsiedende halogenierte Kohlenwasserstoffe dienen.

2. Verfahren nach Anspruch 1, wobei das Metallocen eine Verbindung der Formel la 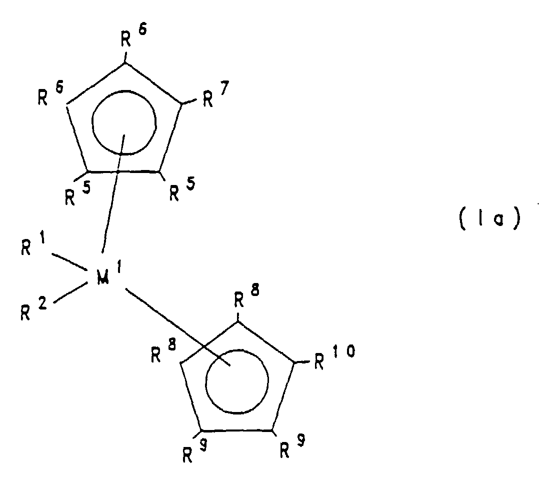 ist, worin R¹ und R² die in Anspruch 1 genannte Bedeutung haben und
R⁵, R⁶, R⁷, R⁸, R⁹ und R¹⁰ gleich oder verschieden sind und ein Wasserstoffatom, ein Halogenatom, eine C₁-C₁₀-Alkylgruppe, eine C₆-C₁₀-Arylgruppe, eine C₁-C₁₀-Alkoxygruppe oder einen -NR¹⁶₂-, -SR¹⁶-,-OSiR¹⁶₃-,-SiR¹⁶₃-, oder -PR¹⁶₂ -Rest bedeuten, worin R¹⁶ eine C₁-C₁₀-Alkylgruppe oder C₆-C₁₀-Arylgruppe, oder im Falle Si oder P enthaltender Reste auch ein Halogenatom ist, oder je zwei benachbarte Reste R⁵, R⁶, R⁷, R⁸, R⁹ oder R¹⁰ mit den sie verbindenden C-Atomen einen Ring bilden.

3. Verfahren nach Anspruch 1, wobei das Metallocen eine Verbindung der Formel Ib 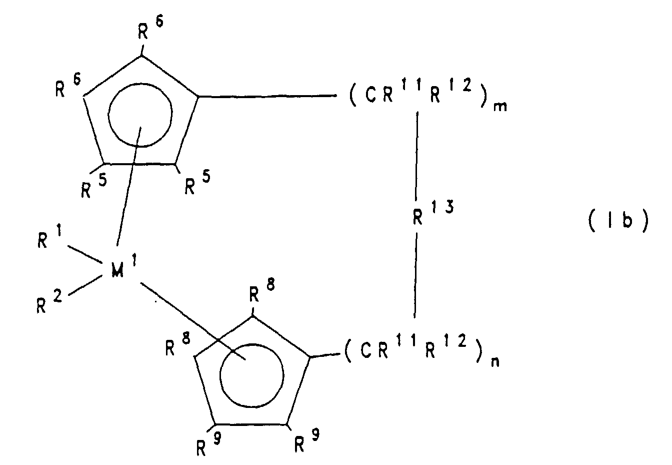 ist, worin R¹ und R² die in Anspruch 1 genannte Bedeutung haben,
R⁵, R⁶, R⁸, R⁹ und R¹⁶ die in Anspruch 2 genannte Bedeutung haben,
R¹³ 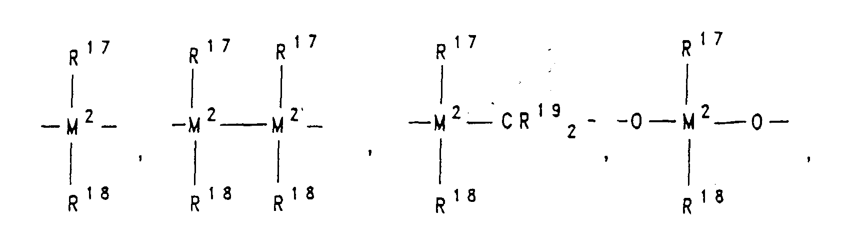 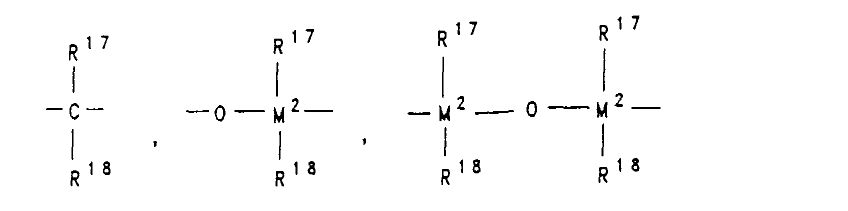 =BR¹⁷, =AlR¹⁷, -Ge-, -Sn-, -0-, -S-, =SO, =SO₂, =NR¹⁷, mCO, =PR¹⁷ oder =P(O)R^{17,} wobei R¹⁷, R¹⁸ und R¹⁹ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder R¹⁷ und R¹⁸ oder R¹⁷ und R¹⁹ jeweils zusammen mit den sie verbindenden Atomen einen Ring bilden,
M² Silizium, Germanium oder Zinn sind, und
R¹¹ und R¹² gleich oder verschieden sind und die für R¹⁷ genannte Bedeutung haben.
m und n gleich oder verschieden und null, 1 oder 2 bedeuten, wobei m plus n null, 1 oder 2, bevorzugt null oder 1 ist.

4. Verfahren nach Anspruch 1, wobei das Metallocen eine Verbindung der Formel Ic 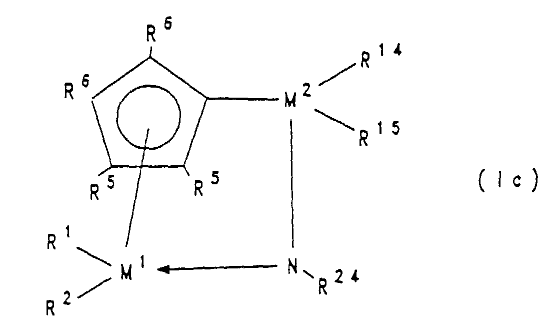 ist, worin R¹ und R² die in Anspruch 1 genannte Bedeutung haben,
R⁵ und R⁶ die in Anspruch 2 genannte Bedeutung haben,
M² die in Anspruch 3 genannte Bedeutung hat,
R¹⁴ und R¹⁵ die Bedeutung von R¹⁷ und R¹⁸ haben, und
R²⁴ die Bedeutung von R¹⁷ hat.

5. Verfahren nach einem oder mehreren der Ansprüch 1 bis 4, wobei der Cokatalysator ein Aluminoxan der Formel IIa für den linearen und /oder Formel llb für den cyclischen Typ 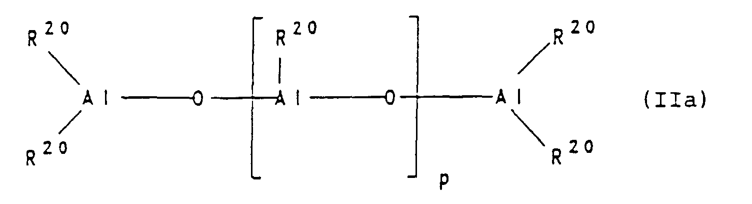 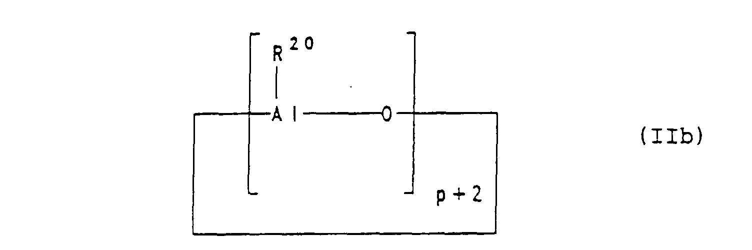 ist, worin R²⁰ gleiche oder verschiedene C₁-C₆-Alkylgruppen bedeutet und p eine ganze Zahl von 4 bis 30 ist.

6. Verfahren nach einem oder mehreren der Ansprüche 1 bis 5, wobei das Suspensionsmittel Propan ist.

7. Verfahren nach einem der mehreren der Ansprüche 1 bis 6, wobei man einen Katalysator einsetzt, welcher sich auf einem Trägermaterial befindet.

8. Vefahren nach einem der mehreren der Ansprüche 1 bis 7, wobei Ethylen, Propylen, 1-Buten, 4-Methyl-1-penten oder Hexen polymerisiert werden.

## Claims

1. A process for the preparation of a polyolefin wax by polymerization or copolymerization of olefins or copolymerization thereof with diolefins at a temperature of -40 to 100°C, at a pressure of 0.5 to 120 bar, in suspension and in the presence of a catalyst comprising a metallocene and a co-catalyst, where the metallocene is a compound of the formula I 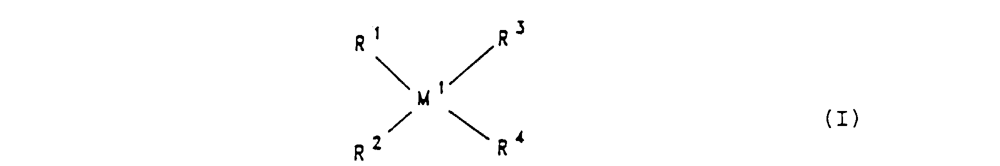 in which M¹ is a metal from group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a mono- or polynuclear hydrocarbon radical capable of forming a sandwich structure with the central atom M¹ and R³ and R⁴ can be linked by a bridge, or one of the radicals R³ and R⁴ is a substituted nitrogen atom,
and low-boiling hydrocarbons having 3 carbon atoms or low-boiling halogenated hydrocarbons serve as suspending agents.

2. The process as claimed in claim 1, where the metallocene is a compound of the formula Ia 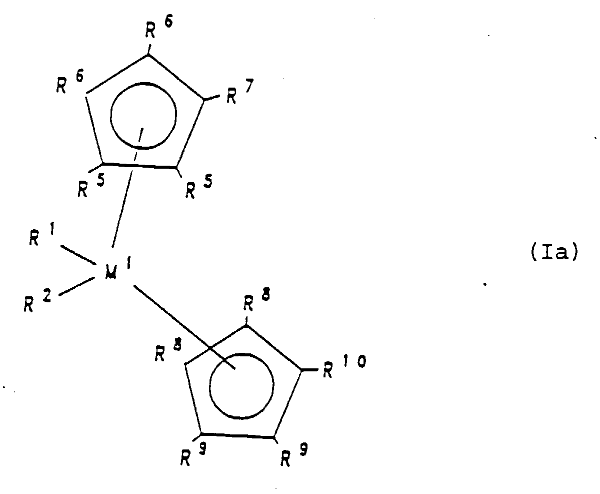 in which R¹ and R² have the meaning given in claim 1 and
R⁵, R⁶, R⁷, R⁸, R⁹ and R¹⁰ are identical or different and are a hydrogen atom, a halogen atom, a C₁-C₁₀-alkyl group, a C₆-C₁₀-aryl group, a C₁-C₁₀-alkoxy group or a -NR¹⁶₂, -SR¹⁶, -OSiR¹⁶₃, -SiR¹⁶₃ or -PR¹⁶₂ radical, in which R¹⁶ is a C₁-C₁₀-alkyl group or a C₆-C₁₀-aryl group, or, in the case of Si- or P-containing radicals, is also a halogen atom, or any two adjacent radicals R⁵, R⁶, R⁷, R⁸, R⁹ or R¹⁰ together with the carbon atoms linking them form a ring.

3. The process as claimed in claim 1, where the metallocene is a compound of the formula Ib 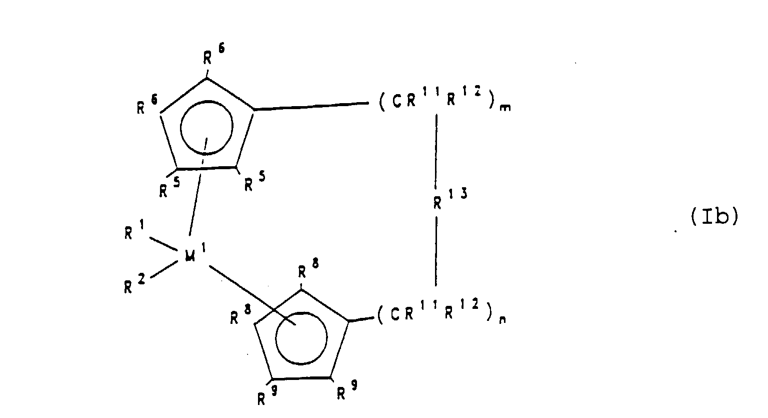 in which R¹ and R² have the meaning given in claim 1,
R⁵, R⁶, R⁸, R⁹ and R¹⁶ have the meaning given in claim 2,
R¹³ is 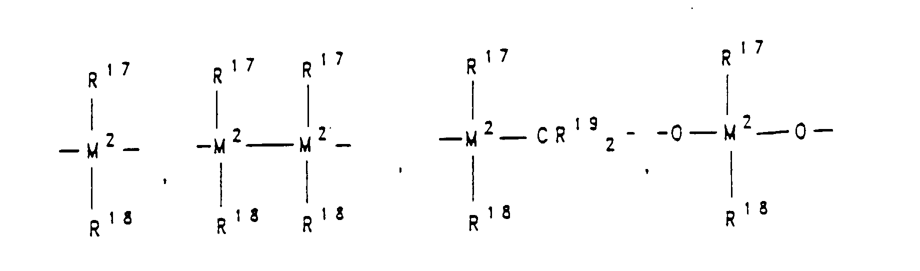 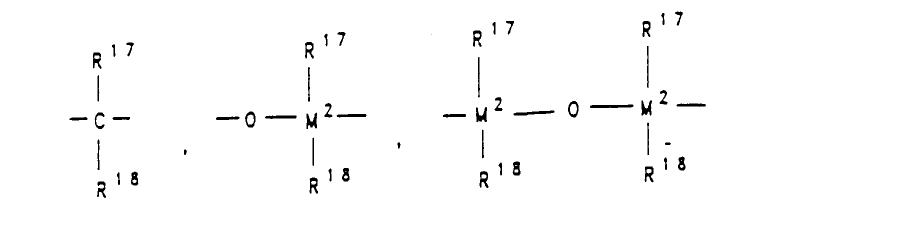 =BR¹⁷, =AlR¹⁷, -Ge-, -Sn-, -O-, -S-, =SO, =SO₂, =NR¹⁷, =CO, =PR¹⁷ or =P(O)R¹⁷, in which R¹⁷, R¹⁸ and R¹⁹ are identical or different and are a hydrogen atom, a halogen atom, a C₁-C₃₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-a C₂-C₁₀-alkenyl group, a C₇-C₄₀-arylalkyl group, a C₈-C₄₀-arylalkenyl group or a C₇-C₄₀-alkylaryl group, or R¹⁷ and R¹⁸ or R¹⁷ and R¹⁹ in each case together with the atoms linking them form a ring,
M² is silicon, germanium or tin, and
R¹¹ and R¹² are identical or different and have the meaning given for R¹⁷, m and n are identical or different and are zero, 1 or 2, m plus n being zero, 1 or 2, preferably zero or 1.

4. The process as claimed in claim 1, where the metallocene is a compound of the formula Ic 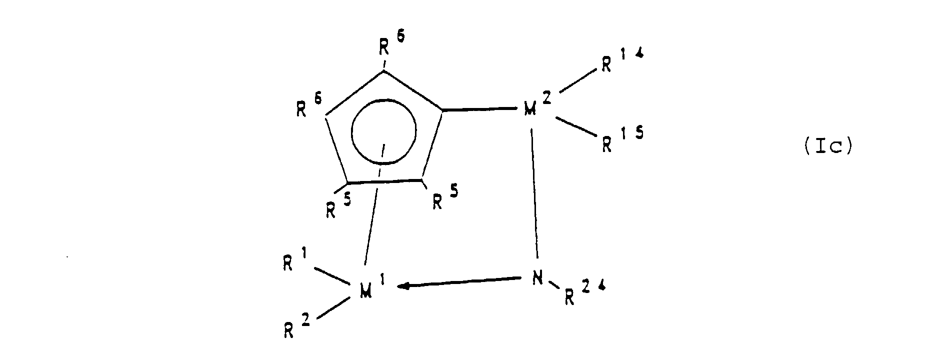 in which R¹ and R² have the meaning given in claim 1,
R⁵ and R⁶ have the meaning given in claim 2,
M² has the meaning given in claim 3,
R¹⁴ and R¹⁵ have the meaning of R¹⁷ and R¹⁸, and
R²⁴ has the meaning of R¹⁷.

5. The process as claimed in one or more of claims 1 to 4, where the co-catalyst is an aluminoxane of the formula IIa for the linear and/or of the formula IIb for the cyclic type 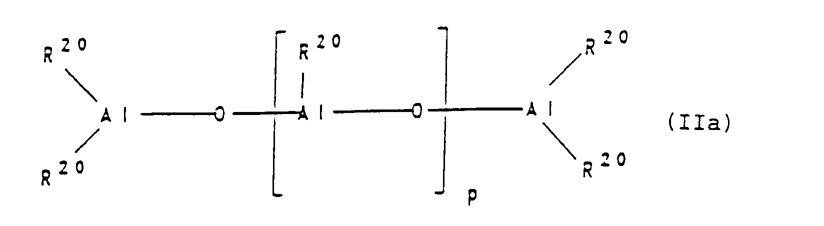 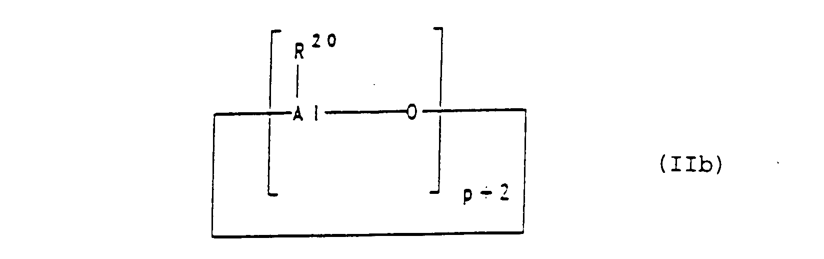 in which the R²⁰ radicals are identical or different C₁-C₆-alkyl groups and p is an integer of from 4 to 30.

6. The process as claimed in one or more of claims 1 to 5, where the suspending agent is propane.

7. The process as claimed in one or more of claims 1 to 6, where a catalyst is used which is present on a support material.

8. The process as claimed in one or more of claims 1 to 7, where ethylene, propylene, 1-butene, 4-methyl-1-pentene or hexene are polymerized.

## Revendications

1. Procédé de préparation d'une cire de polyoléfine, par polymérisation ou copolymérisation d'oléfines ou par leur copolymérisation avec des dioléfines, à une température de -40 à 100°C, sous une pression de 0,5 à 120 bars, en suspension et en présence d'un catalyseur constitué d'un métallocène et d'un cocatalyseur, où le métallocène est un composé de formule I 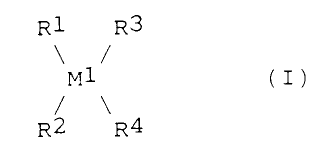 où M¹ est un métal du groupe IVb, Vb ou VIb du Tableau Périodique,
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent chacun un résidu hydrocarboné mono- ou polycyclique, qui avec l'atome central M¹ peut former une structure sandwich, et R³ et R⁴ peuvent être reliés par un pont, ou encore l'un des radicaux R³ et R⁴ est un atome d'azote substitué,
et dans lequel on utilise comme agent de mise en suspension des hydrocarbures à bas point d'ébullition, ayant 3 atomes de carbone, ou des hydrocarbures halogénés à bas point d'ébullition.

2. Procédé selon la revendication 1, dans lequel le métallocène est un composé de formule la 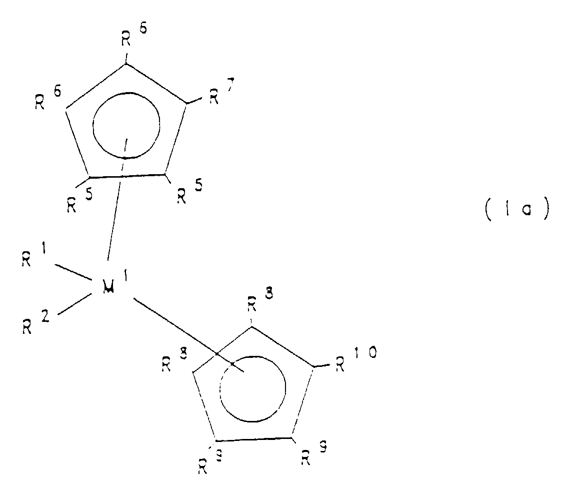 dans laquelle R¹ et R² ont les significations données dans la revendication 1, et R⁵, R⁶, R⁷, R⁸, R⁹ et R¹⁰ sont identiques ou différents et représentent chacun un atome d'hydrogène, un atome d'halogène, un groupe alkyle en C₁-C₁₀, un groupe aryle en C₆-C₁₀, un groupe alkoxy en C₁-C₁₀ ou un groupe -NR¹⁶₂, -SR¹⁶, -OSiR¹⁶₃, -SiR¹⁶_{3,} -SiR¹⁶_{3,} ou -PR¹⁶_{2,} où R¹⁶ est un groupe alkyle en C₁-C₁₀ ou un groupe aryle en C₆-C₁₀, ou encore, dans le cas de radicaux contenant Si ou P, un atome d'halogène, ou encore deux radicaux voisins R⁵, R⁶, R⁷, R⁸, R⁹ ou R¹⁰ forment un cycle avec l'atome de carbone qui les relie.

3. Procédé selon la revendication 1, dans lequel le métallocène est un composé de formule Ib 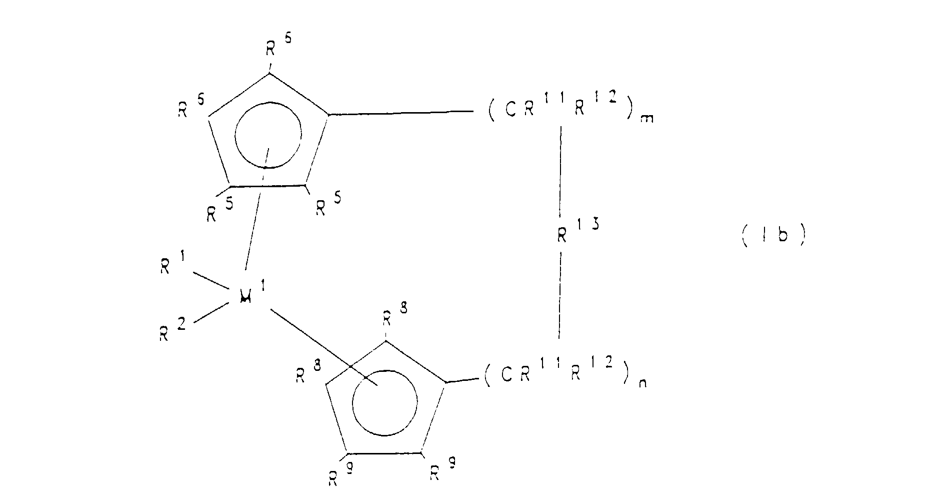 dans laquelle R₁ et R₂ ont les significations données dans la revendication 1,
R⁵, R⁶, R⁷, R⁸, R⁹ et R¹⁶ ont les significations données dans la revendication 2,
R¹³ est 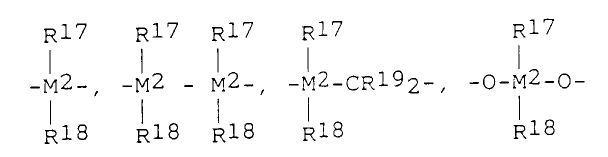 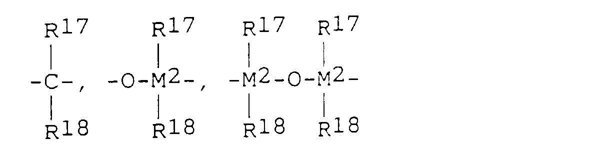 =BR¹⁷, =AIR¹⁷, -Ge-, -Sn-, -O-, -S-, =SO, =SO₂, =NR¹⁷, =CO, =PR¹⁷ ou =P(O)R¹⁷, où R¹⁷, R¹⁸ et R¹⁹ sont identiques ou différents et représentent chacun un atome d'hydrogène, un atome d'halogène, un groupe alkyle en C₁-C₃₀, un groupe fluoralkyle en C₁-C₁₀, un groupe fluoraryle en C₆-C₁₀, un groupe fluoraryle en C₆-C₁₀, un groupe aryle en C₆-C₁₀, un groupe alcoxy en C₁-C₁₀, un groupe alcényle en C₂-C₁₀,
un groupe arylalkyle en C₇-C₄₀, un groupe arylalcényle en C₈-C₄₀ ou un groupe alkylaryle en C₇-C₄₀, ou encore R¹⁷ et R¹⁸ ou R¹⁷ et R¹⁹ forment des cycles avec les atomes qui les relient,
M² est le silicium, le germanium ou l'étain, et
R¹¹ et R¹² sont identiques ou différents et ont les significations données pour R¹⁷,
m et n sont identiques ou différents et valent 0, 1 ou 2, la somme de m et de n valant 0, 1 ou 2, de préférence 0 ou 1.

4. Procédé selon la revendication 1, dans lequel le métallocène est un composé de formule Ic 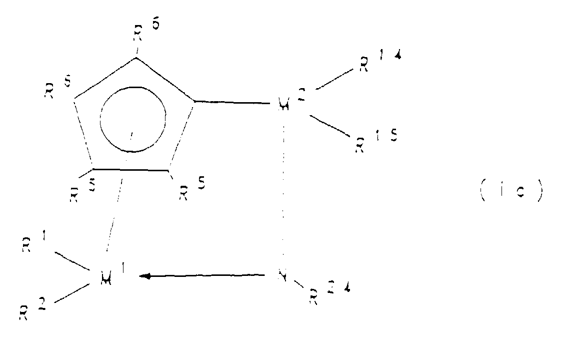 dans laquelle R¹ et R² ont les significations données dans la revendication 1,
R⁵ et R⁶ ont les significations données dans la revendication 2,
M² a les significations données dans la revendication 3,
R¹⁴ et R¹⁵ ont les significations de R¹⁷ et R¹⁸, et
R²⁴ a les significations de R¹⁷.

5. Procédé selon l'une ou plusieurs des revendications 1 à 4, dans lequel le cocatalyseur est un aluminoxane de formule IIa pour le type linéaire et/ou de formule IIb pour le type cyclique 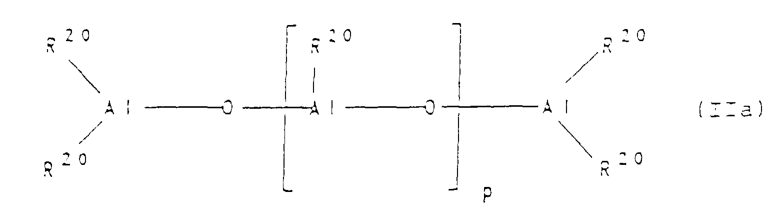 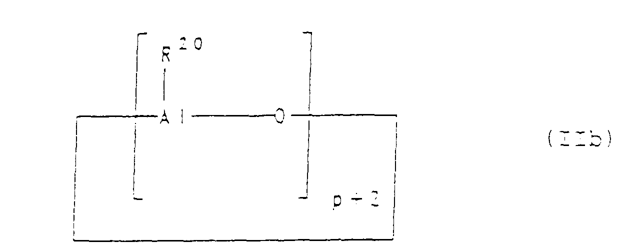 où R²⁰ représente des groupes alkyle en C₁-C₆ identiques ou différents, et P est un nombre entier de 4 à 30.

6. Procédé selon l'une ou plusieurs des revendications 1 à 5, dans lequel l'agent de mise en suspension est le propane.

7. Procédé selon l'une ou plusieurs des revendications 1 à 6, dans lequel on utilise un catalyseur qui se trouve sur un matériau support.

8. Procédé selon l'une ou plusieurs des revendications 1 à 7, dans lequel on polymérise de l'éthylène, du propylène, du 1-butène, du 4-méthyl-1-pentène ou de l'hexène.
